# EUROPÄISCHE PATENTSCHRIFT

(11) **EP 3 578 321 B1**
(45) Veröffentlichungstag und Bekanntmachung des Hinweises auf die Patenterteilung: **03.07.2024**
(21) Anmeldenummer: 19177253.2
(22) Anmeldetag: 29.05.2019
(51) Int. Cl.: B25J 9/16

(54) **VERFAHREN ZUM VERWENDEN MIT EINER MASCHINE ZUM ERSTELLEN EINER ERWEITERTE-REALITÄT-ANZEIGEUMGEBUNG**
METHOD FOR USE WITH A MACHINE FOR GENERATING AN AUGMENTED REALITY DISPLAY ENVIRONMENT
PROCÉDÉ D'UTILISATION AVEC UNE MACHINE PERMETTANT DE GENERER UN ENVIRONNEMENT D'AFFICHAGE DE RÉALITÉ AUGMENTÉE

(30) Priorität: 05.06.2018 DE 102018113336
(43) Veröffentlichungstag der Anmeldung: 11.12.2019
(73) Patentinhaber: Gestalt Robotics GmbH, 10965 Berlin (DE)
(72) Erfinder: Lambrecht, Jens, 10965 Berlin (DE); Funk, Eugen, 10965 Berlin (DE)
(74) Vertreter: v. Bezold & Partner Patentanwälte - PartG mbB

(56) Entgegenhaltungen:
- WO-A1-2005/045729
- DE-A1-102012 014 995
- DE-A1-102012 110 508
- DE-A1-102015 015 503
- DE-A1-102015 016 530
- SUDIRMAN SUD ET AL: "Improving Camera Pose Estimation for Indoor Marker-less Augmented Reality", 2015 IEEE INTERNATIONAL CONFERENCE ON COMPUTER AND INFORMATION TECHNOLOGY; UBIQUITOUS COMPUTING AND COMMUNICATIONS; DEPENDABLE, AUTONOMIC AND SECURE COMPUTING; PERVASIVE INTELLIGENCE AND COMPUTING, IEEE, 26. Oktober 2015 (2015-10-26), Seiten 994-999, XP032836084, DOI: 10.1109/CIT/IUCC/DASC/PICOM.2015.150 [gefunden am 2015-12-22]

## Beschreibung

### Technisches Gebiet

Die Erfindung betrifft ein Verfahren zum Verwenden mit einer Maschine, insbesondere einem mobilen oder stationären Roboter, insbesondere einem Knickarmroboters, mit einer Kalibrierung einer Erweiterte-Realität-Anzeigeumgebung.

### Hintergrund

Anwendungen der Erweiterten Realität, engl. Augmented Reality (AR), ermöglichen die räumliche Darstellung von virtuellen Informationen (bspw. virtuellen Objekten, Text etc.) in realen Umgebungen. Kennzeichnend für die Erweiterte Realität ist ein räumlicher Bezug zwischen virtuellen und realen Objekten. Bspw. lassen sich Anwendungen der Erweiterten Realität in der Robotik implementieren. In bestimmten Anwendungen der Erweiterten Realität kann es notwendig sein, die Erweitere-Realität-Anzeigeumgebung perspektivisch und räumlich korrekt mit der Wirklichkeit zu überlagern. Um dies zu ermöglichen können bspw. künstlicher Marker oder (Prüf-)Körper verwendet werden.

In der praktischen Ausgestaltung stellen sich künstliche Marker oder (Prüf-)Körper jedoch als impraktikabel heraus. Bspw. kann es für eine Kalibrierung notwendig sein, unter großem Aufwand und unter Nutzung manueller Arbeitsschritte die Marker durch manuelles Verfahren des Roboters einzumessen. Eine alternative oder ergänzende Nutzung zusätzlicher (externer) Sensorik zum Tracking des AR-Anzeigemediums ist ebenso impraktikabel und mit unverhältnismäßigen Zusatzkosten verbunden. Ein weiterer Kritikpunkt an den gängigen Lokalisierungs- und Trackingfunktionen im Bereich der Robotik ist zumeist die mangelnde Genauigkeit, sodass bspw. simulierte und real angefahrene Positionen des Roboters nicht exakt übereinstimmen. Gründe hierfür liegen sowohl in der Kalibrierung, in den Genauigkeiten der eingesetzten Sensorik sowie in den eingesetzten Verfahren.

Aus dem Stand der Technik offenbart die DE 10 2015 016 530 A1 ein Roboter-Identifizierungssystem. Das System beinhaltet einen Roboter mit einem drehbaren Arm, eine den Roboter abbildende Bilderfassungseinheit und einen Winkeldetektor, der einen Drehwinkel des Arms detektiert. Das System beinhaltet ferner einen Modellgenerator, der die Formen der Roboter darstellende Robotermodelle basierend auf dem durch den Winkeldetektor detektierten Drehwinkel erzeugt, und eine Bild-Identifizierungseinheit, die ein durch die Bilderfassungseinheit aufgenommenes Bild mit den durch den Modellgenerator erzeugten Robotermodellen vergleicht, um ein Roboterbild in dem Bild zu identifizieren. Es wird ferner allgemein offenbart, dass das Roboter-Identifizierungssystem bspw. bei Augmented-Reality-Anzeigevorrichtungen angewendet werden kann.

Die DE 10 2015 015 503 A1 offenbart ein Robotersystem, das eine mit erweiterter Realität kompatible Anzeige nutzt, die fähig ist, Informationen über den Status und eine Bedienführung eines Roboters, die einem realen Bild oder einer realen Umgebung hinzugefügt ist, für einen Benutzer des Roboters bereitzustellen, um die Effizienz der vom Benutzer durchgeführten Bedienvorgänge zu verbessern. Das Robotersystem beinhaltet einen realen Roboter, eine Steuerungseinheit, die den realen Roboter steuert, und eine Bilderfassungs- und -anzeigevorrichtung, die über ein Kabel oder Funk mit der Steuerungseinheit verbunden ist. Die Bilderfassungs- und -anzeigevorrichtung hat eine Funktion zum Erfassen eines Bildes einer den realen Roboter enthaltenden Szene und eine Funktion zum Anzeigen des erfassten Bildes in Echtzeit. Der Benutzer kann eine den realen Roboter enthaltende Szene in Echtzeit erhalten, indem er eine Kamera, die an der Bilderfassungs- und -anzeigevorrichtung angeordnet ist, auf den realen Roboter richtet, und kann ein Bild in erweiterter Realität überwachen.

Der Erfindung liegt die Aufgabe zu Grunde, eine alternative und/oder verbesserte Technik zur Interaktion mit einer Maschine, insbesondere einem Roboter, mittels Erweiterter Realität zu schaffen.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft ein Verfahren zum Verwenden mit (z. B. Programmieren, Überwachen, Steuern und/oder Interagieren mit) einer Maschine, insbesondere eines mobilen oder stationären Roboters, insbesondere eines Knickarmroboters. Das Verfahren weist ein (bspw. kontinuierliches) Empfangen von mittels eines (z. B. maschinenintegrierten oder roboterintegrierten) Messsystems der Maschine (bspw. kontinuierlich) erfassten Stellungsinformationen (Kinematikstellungsinformationen, z. B. Achsstellungsinformationen, Gelenkstellungsinformationen, Endeffektorstellungsinformationen) der Maschine auf. Das Verfahren weist ein Bilden bzw. Erstellen eines (vollständigen oder teilweisen) dreidimensionalen (virtuellen) Maschinenmodells der Maschine basierend auf den empfangenen Stellungsinformationen auf. Das Verfahren weist ein (bspw. kontinuierliches) Aufnehmen bzw. Erfassen eines (z. B. bewegten) Bildes der Maschine mittels einer (z. B. mobilen oder feststehenden) Bildaufnahmeeinrichtung (z. B. 2D-Kamera, Tiefenbildkamera, Farbkamera und/oder Graustufenkamera) auf. Das Verfahren weist ein (bspw. kontinuierliches) Anzeigen einer Erweiterte-Realität-Anzeigeumgebung mittels einer Anzeigeeinrichtung auf (z. B. als Überlagerung des aufgenommenen Bildes oder als Überlagerung der Wirklichkeit). Die Erweiterte-Realität-Anzeigeumgebung ist (vorzugsweise automatisch) kalibriert durch ein Bestimmen einer relativen Pose (Positionen und Orientierung) zwischen der Maschine und der Bildaufnahmeeinrichtung durch Erkennen der Maschine (d. h. eines Bildes der Maschine) und/oder eines oder mehrerer Teile der Maschine (d. h. eines oder mehrerer Bilder eines oder mehrerer Teile der Maschine) (z. B. eines Teils aus einer vorbestimmten Gruppe von Teilen oder mehrerer Teile aus einer vorbestimmten Gruppen von Teilen) in dem bewegten Bild basierend auf dem dreidimensionalen Maschinenmodell. Die Erweiterte-Realität-Anzeigeumgebung ist (vorzugsweise automatisch) ferner kalibriert durch ein Durchführen eines Koordinatenabgleichs zwischen einem Maschinenkoordinatensystem der Maschine und einem Koordinatensystem der Bildaufnahmeeinrichtung basierend auf der bestimmten relativen Pose.

Zweckmäßig kann dann das kalibrierte Koordinatensystem der Bildaufnahmeeinrichtung mit dem Koordinatensystem der Erweiterte-Realität-Anzeigeumgebung abgeglichen werden. Hier kann bspw. ein festes Verhältnis zwischen Bildaufnahmeeinrichtung und Anzeigeeinrichtung bei einer integrierten Bildaufnahme- und Anzeigeeinrichtung berücksichtigt werden.

Der Ansatz der vorliegenden Offenbarung bezieht sich somit auf eine Technik, welche die Nutzung eines virtuellen (abstrakten) Robotermodells bzw. Maschinenmodells, abgeleitet aus der Echtzeit-Stellungskonfiguration der Maschine (z. B. Winkelkonfiguration des Roboters), vorsieht. Dieses virtuelle Modell kann der realen Maschinengeometrie entsprechen und somit als bekannter, natürlicher Marker Kalibrierungs-, Trackings- und Simulationsfunktionen der Erweiterten Realität unterstützen, indem durch Abgleich von realem und virtuellem Roboter erweiterte und genauere Lokalisierungsfunktionen ermöglicht werden. Zusätzlich können auch dynamische SLAM-Algorithmen hinsichtlich einer Genauigkeitssteigerung unterstützt werden. Somit dient die reale Maschine als dynamischer natürlicher Marker zur Unterstützung der Lokalisierung des AR-Visualisierungsgerätes bzw. dessen Kamera (integrierte Bildaufnahme- und Anzeigeeinrichtung) bzw. der Erweiterte-Realität-Anzeigeumgebung im Koordinatensystem der Maschine. Das Maschinenmodell als virtuelle Repräsentation des Ist-Zustandes der Maschine kann sowohl durch Modellierung anhand von CAD-Modellen (die gleichzeitig für die AR-Anzeige dienen) als auch durch vereinfachte oder abstrakte Darstellungen über bspw. rudimentäre Gelenkmodelle, Skelettmodelle oder Feature-Vektoren erfolgen.

Gegenüber dem bekannten System aus der DE 10 2015 016 530 A1 ermöglicht das hierin offenbarte Verfahren insbesondere, dass ein kontinuierliches Tracking für Erweiterte-Realität-Anwendungen durchgeführt wird, wobei nicht nur eine relative Pose zwischen Kamera und Roboter bestimmt wird, sondern eine vollständige Kalibrierung der Erweiterte-Realität-Anzeigeumgebung durchgeführt wird, die auch einen Abgleich der entsprechenden Koordinatensysteme aufweist. Zusätzlich ermöglicht das Verfahren auch, dass nur ein oder mehrere Teile des Roboters erkennbar sein müssen und nicht der gesamte Roboter bzw. die gesamte Maschine.

Zweckmäßig kann die Maschine im Bild durch ein Erkennen einer Übereinstimmung des dreidimensionalen Maschinenmodells mit der Maschine im bewegten Bild erkannt werden.

Beispielsweise kann die Maschine ein mobiler oder stationärer Roboter (z. B. Industrieroboter oder Serviceroboter), insbesondere ein Knickarmroboter, eine Werkzeugmaschine, ein Fördersystem (stationäres Transportsystem), ein mobiles Transportsystem und/oder ein mobiler Manipulator sein.

Es ist möglich, dass das Verfahren bspw. zumindest teilweise von einer Maschinensteuerung (z. B. Robotersteuerung), von einer Steuerung der Anzeigeeinrichtung, von einem Embedded-Gerät, auf einem Server und/oder in der Cloud durchgeführt wird.

Erfindungsgemäß weist die Erweiterte-Realität-Anzeigeumgebung ein Maschinensimulationsmodell (Teilmodell (z. B. nur Endeffektor) oder Vollmodell der Maschine) in Überlagerung mit der Maschine (z. B. im bewegten Bild oder der Wirklichkeit) auf, das basierend auf den empfangenen Stellungsinformationen gebildet ist. Vorzugsweise ist ein Programm zum Steuern der Maschine mit dem Maschinensimulationsmodell in der Erweiterte-Realität-Anzeigeumgebung simulierbar, erstellbar, überwachbar und/oder veränderbar. Alternativ oder zusätzlich entspricht das Maschinensimulationsmodell dem dreidimensionalen Maschinenmodell oder ist von dem dreidimensionalen Maschinenmodell abgeleitet.

In einer Weiterbildung weist das Verfahren ferner ein Erfassen eines Größen-, Positions- und/oder Orientierungsversatzes zwischen der Maschine (z. B. im Bild) und dem Maschinensimulationsmodell durch einen Pixelvergleich auf. Beispielsweise kann dann das Maschinensimulationsmodell entsprechend dem erfassten Größen- Positions- und/oder Orientierungsversatz verändert (z. B. größenverändert, verschoben und/oder gedreht) werden.

In einem weiteren Ausführungsbeispiel wird die Maschine in dem Bild mittels des dreidimensionalen Maschinenmodells referenziert (z. B. räumlich referenziert).

In einem weiteren Ausführungsbeispiel werden ein oder mehrere Teile der Maschine in dem Bild mittels eines Teils des dreidimensionalen Maschinenmodells und des einen oder der mehreren Teile der Maschine im Bild (z. B. räumlich) referenziert. Es ist auch möglich, dass das dreidimensionale Maschinenmodell ein Teilmaschinenmodell ist und ein oder mehrere Teile der Maschine in dem Bild mittels des Teilmaschinenmodells und des einen oder der mehreren Teile der Maschine im Bild (z. B. räumlich) referenziert wird.

Beispielsweise können sowohl ein dreidimensionales Vollmaschinenmodell und eines oder mehrere dreidimensionale Teilmaschinenmodelle gebildet werden. Es ist auch möglich, dass das Maschinenmodell variabel ist und bspw. bei der initialen Kalibrierung ein Vollmaschinenmodell und bei der dynamischen Lokalisierung ein Teilmaschinenmodell ist.

In einem weiteren Ausführungsbeispiel wird eine Position und/oder Orientierung des einen oder der mehreren Teile der Maschine relativ zu einer Maschinenbasis der Maschine und/oder einem Nullpunkt des Maschinenkoordinatensystems aus den empfangenen Stellungsinformationen abgeleitet und/oder geschätzt.

In einer Ausführungsform ist das Bild ein Tiefenbild und/oder die Bildaufnahmeeinrichtung weist eine Tiefenbildkamera auf. Vorzugsweise kann das Erkennen des einen oder der mehreren Teile der Maschine das Erkennen von mindestens lediglich einem einzigen dreidimensionalen Raumpunkt der Maschine im Bild aufweisen.

Alternativ oder zusätzlich kann das Bild ein 2D-Bild sein und/oder die Bildaufnahmeeinrichtung eine 2D-Kamera aufweisen. Vorzugsweise kann das Erkennen des einen oder der mehreren Teile der Maschine das Erkennen von mindestens lediglich drei (2D-) Punkten der Maschine im Bild aufweisen.

In einer weiteren Ausführungsform ist die Erweiterte-Realität-Anzeigeumgebung (d. h. die Bildaufnahmeeinrichtung) dynamisch lokalisiert (= Lokalisierung, auch Registration bzw. kontinuierlich: Tracking genannt) durch ein kontinuierliches Bestimmen der relativen Pose und/oder ein kontinuierliches Durchführen des Koordinatenabgleichs.

Erfindungsgemäß ist die Erweiterte-Realität-Anzeigeumgebung (d. h. die Bildaufnahmeeinrichtung) dynamisch lokalisiert durch ein Anwenden eines Simultane-Lokalisierung-und-Kartenerstellung-AIgorithmus (SLAM-Algorithmus) auf eine Mehrzahl von Bildern (z. B. ein bewegtes Bild) der Bildaufnahmeeinrichtung (18A).

In einer Weiterbildung ist ein Nullpunkt des SLAM-Algorithmus (z. B. ein Nullpunkt der vom SLAM-Algorithmus erstellten Karte) auf einen Nullpunkt des Maschinenkoordinatensystems und/oder ein kalibrierten Nullpunkt eines Koordinatensystems der Bildaufnahmeeinrichtung gesetzt und/oder gehalten.

Erfindungsgemäß verwendet ein Loop-Closing (Wiedererkennen von Bekanntem) des SLAM-Algorithmus zum Herausrechnen eines Drifts des SLAM-Algorithmus die im Bild erkannte Maschine und/oder den einen oder die mehreren im Bild erkannten Teile der Maschine (z. B. je nach Verfügbarkeit) und die empfangenen Stellungsinformationen der Maschine. Damit kann die Maschine und/oder ein oder mehrere Teile davon als Ankerpunkt für den SLAM-Algorithmus verwendet werden.

In einem Ausführungsbeispiel weist das Durchführen des Koordinatenabgleichs ein Setzen und/oder Halten eines Nullpunkts des Koordinatensystems der Erweiterte-Realität-Anzeigeumgebung auf einen Nullpunkt des Maschinenkoordinatensystem auf.

In einem weiteren Ausführungsbeispiel weist das Referenzieren ein Drehen, Verschieben und/oder Größenverändern des dreidimensionalen Maschinenmodells und/oder ein Anwenden eines Iterative-Closest-Point-Algorithmus, eines Perspective-n-Point-Algorithmus und/oder eines künstlichen neuronalen Netzes (KNN) (bzw. Deep-Learning) auf.

In einem weiteren Ausführungsbeispiel ist das dreidimensionale Maschinenmodell ein CAD-Modell, ein Skelettmodell, ein Gittermodell oder ein Punktmodell.

In einer Ausführungsvariante ist die Maschine frei von künstlichen Markern und/oder das Bild ist frei von künstlichen Markern (z. B. an der Maschine).

In einer weiteren Ausführungsvariante ist das Bild ein 2D-Bild und/oder die Bildaufnahmeeinrichtung weist eine 2D-Kamera auf. Vorzugsweise kann die Maschine in dem Bild mittels in Deckung bringen (d. h. in Übereinstimmung bringen) des dreidimensionalen Maschinenmodells und der Maschine im Bild durch ein Drehen des dreidimensionalen Maschinenmodells, ein Verschieben des dreidimensionalen Maschinenmodells, ein Größenverändern des dreidimensionalen Maschinenmodells, ein Anwenden eines Perspective-n-Point-Algorithmus und/oder ein Anwenden eines künstlichen neuronalen Netzes (bzw. Deep Learning) erkannt werden.

Bspw. kann die Maschine im Bild zunächst identifiziert werden (z. B. mittels eines KNN) und anschließend der Perspective-n-Point-Algorithmus angewendet werden.

In einem Ausführungsbeispiel werden ein Erkennen der Maschine und ein Erkennen des einen oder der mehreren Teile der Maschine parallel oder nacheinander durchgeführt.

Die Erfindung betrifft auch eine Vorrichtung zum Steuern (z. B. Programmieren, Überwachen, Interagieren mit) einer Maschine, insbesondere eines mobilen oder stationären Roboters, insbesondere eines Knickarmroboters. Die Vorrichtung weist eine Bildaufnahmeeinrichtung, eine Anzeigeeinrichtung und eine Verarbeitungseinheit, die zum Ausführen eines wie hierin offenbarten Verfahrens eingerichtet ist, auf.

Die Erfindung betrifft ferner eine Verwendung der Vorrichtung bei einem Mensch-Roboter-Kollaboration-Arbeitsplatz, in dem ein Roboter einem Menschen assistiert bzw. umgekehrt.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine Schemadarstellung eines Systems zum Steuern einer Maschine gemäß der vorliegenden Offenbarung;
- Figur 2: eine schematische Illustration eines Kalibriervorgangs gemäß der vorliegenden Offenbarung;
- Figur 3: eine Darstellung eines Verfahrensschritts zum in Deckung bringen eines dreidimensionalen CAD-Maschinenmodells mit einem Tiefenbild; und
- Figur 4: eine Darstellung eines Verfahrensschritts zum in Deckung bringen eines dreidimensionalen Skelett-Maschinenmodells mit einem in einem Kamerabild identifizierten Skelett einer Maschine.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Ausführliche Beschreibung

Nachfolgend ist ein besonders bevorzugtes Ausführungsbeispiel für die Vorrichtung und das Verfahren gemäß der vorliegenden Offenbarung beschrieben, das sich auf einen mehrachsigen Knickarmroboter bezieht. Beispielsweise kann die Lehre der vorliegenden Offenbarung in Arbeitsumgebungen mit (enger) Mensch-Roboter-Kollaboration, bei der ein Roboter einem Menschen assistiert, eingesetzt werden. Neben diesem Ausführungsbeispiel ist die Lehre der vorliegenden Offenbarung auch auf andere Maschinen, und insbesondere Roboter (z. B. Industrieroboter oder Serviceroboter), stationär oder mobil, anwendbar. Insbesondere kann die Maschine auch eine Werkzeugmaschine, ein Fördersystem (stationäres Transportsystem), ein mobiles Transportsystem und/oder ein mobiler Manipulator sein. Insbesondere kann die Maschine eine (teil-) gelenkförmige kinematische Struktur aufweisen.

Besonders vorteilhaft können das hierin offenbarte Verfahren und die hierin offenbarte Vorrichtung in Anwendungsfällten eingesetzt werden, in denen die Maschine frei von künstlichen Markern ist und/oder ein aufgenommenes Bild der Maschine frei von künstlichen Markern an der Maschine ist. Wie hierin offenbart, wird die Maschine selbst als dynamischer, natürlicher Marker verwendet.

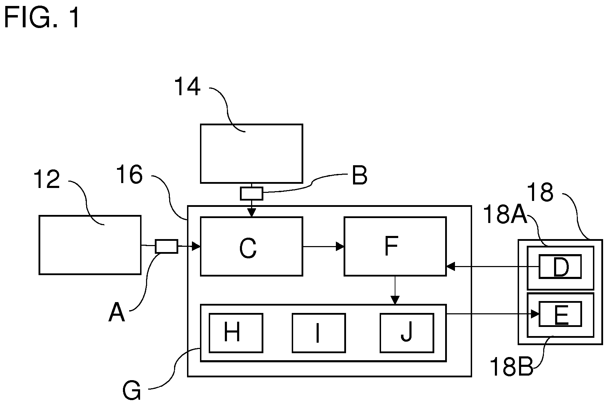

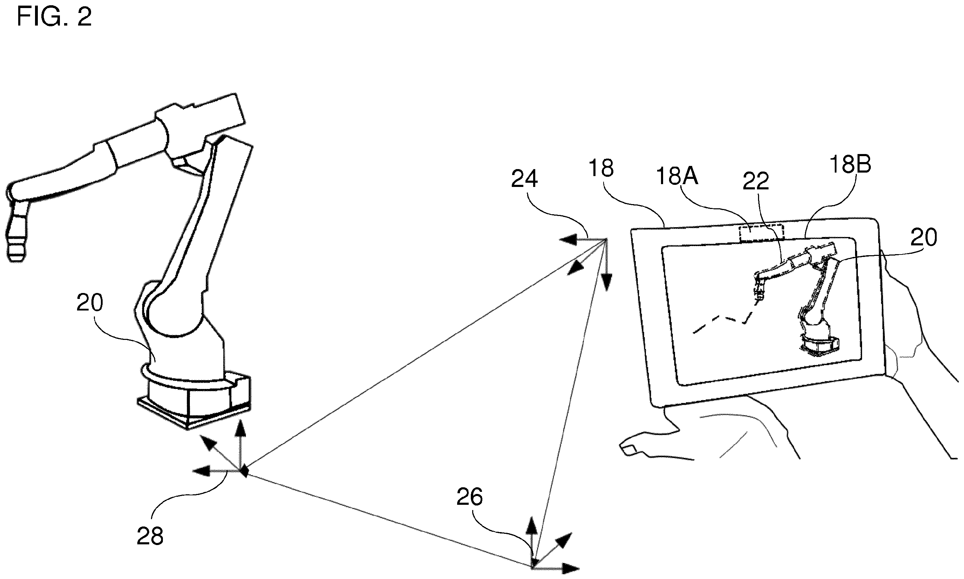

Nachfolgend wird zunächst auf die Figuren 1 und 2 Bezug genommen. Die Figur 1 zeigt eine Vorrichtung 10. Die Vorrichtung 10 weist eine Robotersteuerung 12, einen Speicher 14, eine Verarbeitungseinheit 16 und eine integrierte Bildaufnahme- und Anzeigeeinrichtung 18 auf. Die Figur 2 zeigt die integrierte Bildaufnahme- und Anzeigeeinrichtung 18 und einen Roboter 20 als Beispiel für eine Maschine.

Die Robotersteuerung 12 ist zum Steuern eines als Knickarmroboter ausgeführten Roboters 20 (siehe Figur 2) ausgebildet. Z. B. kann die Robotersteuerung 12 mittels Programmen, die in der Robotersteuerung 12 gespeichert sind, den Roboter 20 steuern. Die Robotersteuerung 12 ist mit einem Messsystem, insbesondere mehreren Winkelsensoren, des Roboters 20 zum Empfangen von aktuellen Stellungsinformationen (aktuelle Kinematikstellungsinformationen) der Gelenke bzw. Achsen und des Endeffektors des Roboters 20 (z. B. Gelenkwinkel, Achswerte, kartesische Koordinaten des Endeffektors usw.) kommunikativ verbunden. Die Robotersteuerung 12 kann mit anderen Geräten kommunizieren und die empfangenen aktuellen Stellungsinformationen anderen Geräten zur Verfügung stellen.

Im Speicher 14 sind Kinematikkonfigurationsinformationen des mit der Robotersteuerung 12 verbundenen Roboters 20 gespeichert. Die Kinematikkonfigurationsinformationen betreffen die prinzipielle Kinematik des Roboters 20, d. h. wie und wo die einzelnen Achsen bzw. Gelenke des Roboters miteinander relativ zusammenwirken (können) sowie die Abmessungen des Roboters 20. Die Kinematikkonfigurationsinformationen können bspw. auch CAD-Daten des Roboters 20 umfassen. Der Speicher 14 kann mit anderen Geräten kommunizieren und die Kinematikkonfigurationsinformationen anderen Geräten zur Verfügung stellen. Der Speicher 14 kann bspw. auch Teil der Robotersteuerung 12 sein.

Die Verarbeitungseinheit 16 kann als separate Einheit vorgesehen sein. Die Verarbeitungseinheit 16 kann auch zumindest teilweise in der Robotersteuerung 12 und/oder der integrierten Bildaufnahme- und Anzeigeeinrichtung 18 integriert sein.

Die Verarbeitungseinheit 16 steht in Kommunikationsverbindung (kabellos oder kabelgebunden) mit der Robotersteuerung 12, z. B. über eine Ethernet-Schnittstelle. In einem Verfahrensschritt A empfängt die Verarbeitungseinheit 16 kontinuierlich die aktuellen Stellungsinformationen (Ist-Pose) von der Robotersteuerung 12. Zum Beispiel liest die Verarbeitungseinheit 16 über die Kommunikationsschnittstelle der Robotersteuerung 12 die Ist-Pose der Gelenke/Achsen und des Endeffektors des Roboters 20 kontinuierlich aus. Es ist auch möglich, dass die aktuellen Stellungsinformationen des Roboters 20 bspw. direkt von den Winkelsensoren des Roboters 20 oder von einem anderen Gerät empfangen werden.

In einem Verfahrensschritt B liest die Verarbeitungseinheit 16 die Kinematikkonfigurationsinformationen aus dem Speicher 14 aus. Es ist auch möglich, dass diese Daten und Informationen bspw. über eine Kommunikationsschnittstelle von einem anderen Gerät empfangen werden, z. B von der Robotersteuerung 12.

Basierend auf den aktuellen Stellungsinformationen und den Kinematikkonfigurationsinformationen erstellt die Verarbeitungseinheit 16 in einem Verfahrensschritt C ein virtuelles, dreidimensionales Modell (physische Repräsentation) des Roboters 20, z. B. unter Verwendung von CAD-Daten. Das Modell kann insbesondere ein sich bspw. auf Basis von aktuellen Stellungsinformationen von der Robotersteuerung 12 kontinuierlich aktualisierendes Echtzeit-Modell sein. Das Modell ist hierin auch als Maschinenmodell bezeichnet.

Das Maschinenmodell kann ein Vollmodell des Roboters 20 sein. Es ist auch möglich, dass das Maschinenmodell nur ein Teilmodell des Roboters 20 ist, das nur einen oder mehrere separate oder direkt miteinander verbundene Teile des Roboters 20 abbildet, z. B. eine oder mehrere Achsen, einen Standfuß und/oder einen Endeffektor des Roboters 20. Es ist ferner möglich, dass mehrere unterschiedliche Teilmodelle des Roboters 20, die unterschiedliche Teile oder Teilekombinationen des Roboters 20 abbilden, erstellt werden. Es ist ebenfalls möglich, dass sowohl ein Vollmodell als auch ein oder mehrere Teilmodelle des Roboters 20 im Maschinenmodell umfasst sind.

Das Maschinenmodell kann ein CAD- bzw. CAD-ähnliches Maschinenmodell sein. Es ist allerdings auch möglich, dass das Maschinenmodell bspw. ein Skelettmodell (Gelenkmodell), ein Gittermodell, ein Punktmodell usw. ist und/oder Feature-Vektoren (allgemeine Vektoren zum Hinterlegen von Eigenschaften, minimale Daten (Ecken, Kanten, Punkte)) aufweist.

Die integrierte Bildaufnahme- und Anzeigeeinrichtung 18 weist eine Bildaufnahmeeinrichtung ((Video-) Kameraeinrichtung) 18A zum Aufnehmen bzw. Erfassen eines bewegten Bildes (Videobildes) in einem Verfahrensschritt D auf. Die Bildaufnahmeeinrichtung 18A kann je nach Ausführungsform eine 2D-Kamera (Graustufen- oder Farbkamera) und/oder eine 3D-Kamera/Tiefenbildkamera, zum Beispiel eine Stereokamera, aufweisen.

Die integrierte Bildaufnahme- und Anzeigeeinrichtung 18 weist eine Anzeigeeinrichtung 18B zum Anzeigen einer Erweiterte-Realität-Anzeigeumgebung 22 (Augmented-Reality-Anzeigeumgebung) in einem Verfahrensschritt E auf. Die Erweiterte-Realität-Anzeigeumgebung 22 wird von der Anzeigeeinrichtung 18B zum Überlagern einer Wirklichkeit angezeigt.

Es ist auch möglich, dass die Bildaufnahmeeinrichtung 18A und die Anzeigeeinrichtung 18B gerätetechnisch getrennt voneinander vorgesehen sind. Zusätzlich oder alternativ können die Bildaufnahmeeinrichtung 18A und/oder die Anzeigeeinrichtung 18B feststehend oder mobil sein.

Die integrierte Bildaufnahme- und Anzeigeeinrichtung 18 steht in Kommunikationsverbindung (kabellos oder kabelgebunden) mit der Verarbeitungseinheit 16. Die integrierte Bildaufnahme- und Anzeigeeinrichtung 18 sendet das aufgenommene bewegte Bild über die Kommunikationsverbindung kontinuierlich an die Verarbeitungseinheit 16.

Die integrierte Bildaufnahme- und Anzeigeeinrichtung 18 kann beispielsweise als eine sogenannte Optical-See-Through- oder eine Video-See-Through-Einrichtung ausgebildet sein. Z. B. kann die integrierte Bildaufnahme- und Anzeigeeinrichtung 18 eine Datenbrille, eine Netzhautanzeige (auch als Retinal-Display bekannt), ein Smartphone oder einen Tablet-Computer aufweisen. Bei einer Video-See-Through-Einrichtung kann das von der Bildaufnahmeeinrichtung 18A aufgenommene Bild überlagert von der Erweiterte-Realität-Anzeigeumgebung 22 auf der Anzeigeeinrichtung 18B angezeigt werden (Verfahrensschritt E).

Im Ausführungsbeispiel ist die integrierte Bildaufnahme- und Anzeigeeinrichtung 18 als eine Video-See-Through-Einrichtung in Form eines Tablet-Computers ausgeführt (siehe Figur 2). Der Tablet-Computer weist auf dessen in Figur 2 nicht sichtbarer Rückseite die Bildaufnahmeeinrichtung 18A auf (gekennzeichnet durch gestrichelte Linien in Figur 2). Auf der Vorderseite kann einem Benutzer das aufgenommene bewegte Bild auf einer bspw. berührungsempfindlichen Anzeigeeinrichtung 18B angezeigt werden. Das bewegte Bild zeigt im Beispiel den Roboter 20. Das bewegte Bild wird von der Erweiterte-Realität-Anzeigeumgebung 22 überlagert, die zur besseren Unterscheidbarkeit in gestrichelten Linien dargestellt ist. Im dargestellten Beispiel umfasst die Erweiterte-Realität-Anzeigeumgebung 22 ein Roboter- bzw. Maschinensimulationsmodell, das den Roboter 20 überlagert, und eine geplante Trajektorie. Daneben können bspw. spezifische Informationen mit Positionsbezug am Roboter 20 in der Erweiterte-Realität-Anzeigeumgebung 22 umfasst sein. Um die Erweiterte-Realität-Anzeigeumgebung 22 in der richtigen Position, Größe und Orientierung als Überlagerung des bewegten Bildes anzuzeigen, muss die Erweiterte-Realität-Anzeigeumgebung 22 bzw. die Bildaufnahmeeinrichtung 18A zunächst kalibriert und sodann kontinuierlich lokalisiert werden.

Zur Kalibrierung der Erweiterte-Realität-Anzeigeumgebung 22, die nachfolgend im Detail beschrieben ist, weist das bewegte Bild den Roboter 20 (oder zumindest einen Teil des Roboters 20) auf. Zum dynamischen Lokalisieren der Erweiterte-Realität-Anzeigeumgebung 22 kann das bewegte Bild den Roboter 20 (oder eines Teils davon) kontinuierlich, nur zeitweise oder auch gar nicht aufweisen.

Die Verarbeitungseinheit 16 empfängt das aufgenommene bewegte Echtzeit-Bild von der integrierten Bildaufnahme- und Anzeigeeinrichtung 18. In einem Verfahrensschritt F sucht die Verarbeitungseinheit 16 basierend auf dem dreidimensionalen Maschinenmodell das bewegte Bild nach dem Roboter 20 ab. Die Verarbeitungseinheit 16 versucht somit, den Roboter 20 (oder einen oder mehrere Teile davon) im bewegten Bild zu erkennen. Hierfür kann die Verarbeitungseinheit 16 insbesondere versuchen, das Maschinenmodell in einem Abschnitt des bewegten Bildes zu referenzieren, d. h. quasi in Deckung zu bringen, wobei der Abschnitt bei Übereinstimmung dann dem Roboter 20 und/oder einem oder mehreren Teilen davon entspricht. Zum Referenzieren kann das dreidimensionale Maschinenmodell beispielsweise verkleinert, vergrößert, verschoben und/oder gedreht werden. Je nach Anwendungsfall können hierbei verschiedene Algorithmen und Verfahren zum Einsatz kommen, z. B. ein Iterative-Closest-Point-Algorithmus (ICP-Algorithmus), ein Perspective-n-Point-Algorithmus (PnP-Agorithmus) und/oder die Verwendung eines künstlichen neuronalen Netzes (KNN) bzw. mittels Deep-Learning-Optimierungsmethoden (Tiefgehendes-Lernen-Optimierungsmethoden).

Nachfolgend sind einige bevorzugte Varianten zum Referenzieren (z. B. in Deckung bringen) des dreidimensionale Maschinenmodells mit dem Roboter 20 und/oder eines oder mehrerer Teile davon beschrieben.

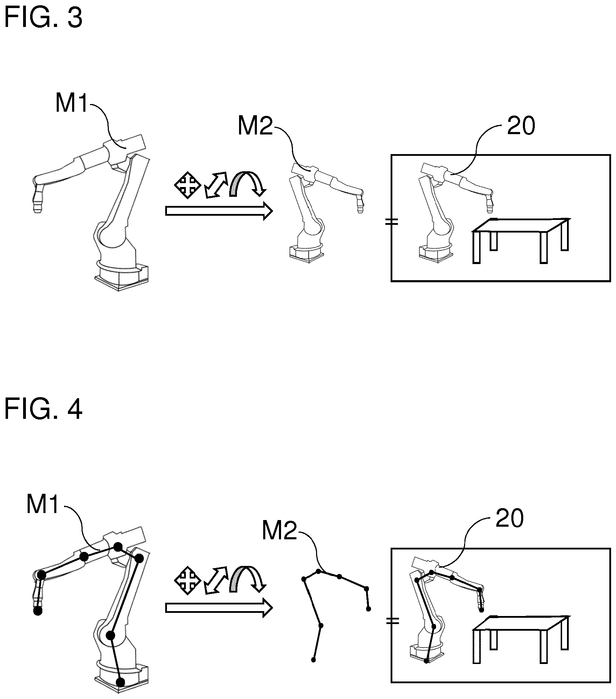

In Figur 3 ist ein CAD-Maschinenmodell (Vollmodell) M1 dargestellt, das basierend auf den Stellungsinformationen und den Kinematikkonfigurationsinformationen von der Verarbeitungseinheit 16 erstellt wurde. Das bewegte Bild (rechts in Figur 3) ist ein Tiefenbild der beispielhaft als Tiefenbildkamera ausgebildeten Bildaufnahmeeinrichtung 18A. Die einzelnen Bildpunkte liegen im Tiefenbild als 3D-Punktwolke vor. Die einzelnen Bildpunkte im Tiefenbild können deterministisch zu räumlichen 3D-Punkte umgerechnet werden. Das CAD-Maschinenmodell M1 wird mittels eines ICP-Algorithmus solange gedreht, verschoben und größenverändert, bis eine Übereinstimmung zwischen dem CAD-Maschinenmodell M1 (angepasst als Modell M2) und einem Ausschnitt des Tiefenbildes festgestellt wird, d. h. bis das Maschinenmodell M1 als angepasstes Maschinenmodell M2 in Überdeckung mit dem Roboter 20 im bewegten Bild ist.

In einer weiteren, nicht gesondert in den Figuren dargestellten Ausführungsvariante ist das dreidimensionale Maschinenmodell ein CAD-Teilmodell, das nur ein oder mehrere Teile des Roboters 20 aufweist. Das Teil oder die Teile sind hierbei vorbestimmt und bspw. aus einer Gruppe von vorbestimmten Teilen (z. B. Standfuß, einzelne Achsen/Gelenke, Endeffektor) ausgewählt. Das bewegte Bild ist ein Tiefenbild der beispielhaft als Tiefenbildkamera ausgebildeten Bildaufnahmeeinrichtung 18A. Die einzelnen Bildpunkte liegen im Tiefenbild als 3D-Punktwolke vor. Das CAD-Teilmaschinenmodell wird mittels eines ICP-Algorithmus solange gedreht, verschoben und größenverändert, bis eine Übereinstimmung zwischen dem CAD-Teilmaschinenmodell und einem Ausschnitt des Tiefenbildes festgestellt wird, d. h. bis das CAD-Teilmaschinenmodell als angepasstes Maschinenmodell in Überdeckung bzw. Übereinstimmung mit einem oder mehreren Teilen des Roboters 20 im bewegten Bild ist. So kann ein Abgleich stattfinden, ob bspw. einzelne Achsen erkannt werden können, deren aktuelle Lage in Bezug auf das Roboterbasiskoordinatensystem (z. B. Endeffektor, Standfuß) bekannt sind (z. B. aus den aktuellen Stellungsinformationen).

In einer weiteren, nicht gesondert in den Figuren dargestellten Ausführungsvariante ist das von der Verarbeitungseinheit 16 erstellte Maschinenmodell ebenfalls ein 3D-CAD-Maschinenmodell (Vollmodell oder Teilmodell). Das bewegte Bild ist ein 2D-Bild einer beispielhaft als 2D-Kamera ausgebildeten Bildaufnahmeeinrichtung 18A. Hier kann durch Größenverändern, Verschieben und Drehen des 3D-CAD-Maschinenmodells versucht werden, eine Übereinstimmung mit einem Ausschnitt des 2D-Bildes herbeizuführen. Zusätzlich kann bspw. zunächst mittels eines KNN der Roboter 20 im bewegten Bild erkannt werden, um den Ausschnitt zu definieren.

In Figur 4 ist ein dreidimensionales Skelett-Maschinenmodell (Vollmodell) M1 dargestellt, das basierend auf den Stellungsinformationen und den Kinematikkonfigurationsinformationen von der Verarbeitungseinheit 16 erstellt wurde. Das bewegte Bild (rechts in Figur 4) ist ein 2D-Bild einer beispielhaft als 2D-Kamera ausgebildeten Bildaufnahmeeinrichtung 18A. Im bewegten Bild wird mittels eines KNN bzw. mittels Deep-Learning eine 2D-Skelettstruktur oder 2D-Skelettpunkte erkannt. Mittels eines PnP-Algorithmus kann eine Transformation zwischen dem ursprünglichen 3D-Skelett-Maschinenmodell M1 und einem durch Drehung, Größenverändern und/oder Verschieben angepassten 3D-Skelett-Maschinenmodell M2 in Überdeckung mit der erkannten 2D-Skelettstrukur im bewegten Bild F ermittelt werden. Es ist auch möglich, dass das Skelett-Maschinenmodell M1 ein Teilmodell des Roboters 20 ist, das nur ein oder mehrere Teile des Roboters 20 umfasst.

In einer weiteren, nicht gesondert in den Figuren dargestellten Ausführungsvariante ist das von der Verarbeitungseinheit 16 erstellte Maschinenmodell ein dreidimensionales Punktmodell (Vollmodell oder Teilmodell). Zum Beispiel kann das bewegte Bild ein Tiefenbild sein und das Erkennen eines Teils des Roboters 20 kann bereits möglich sein, wenn lediglich ein einziger dreidimensionaler Raumpunktes des Roboters 20 im bewegten Bild erkannt wird. Wenn bspw. die relative Positionierung dieses Raumpunktes in Bezug zum Roboterbasiskoordinatensystem (bzw. Maschinenbasiskoordinatensystem) bekannt ist, z. B. aus den aktuellen Stellungsinformationen, kann die nachfolgende Kalibrierung und/oder dynamische Lokalisierung durchgeführt werden. Es ist auch möglich, dass das bewegte Bild ein 2D-Bild ist und das Erkennen des Teils des Roboters 20 das Erkennen von lediglich drei Punkten der Maschine im bewegten Bild aufweist. Erneut kann für die nachfolgende Kalibrierung und/oder dynamische Lokalisierung eine Information hinsichtlich der relativen Positionierung dieser drei Punkte zum Roboterbasiskoordinatensystem benötigt werden, die z. B. ableitbar aus den aktuellen Stellungsinformationen ist.

Es ist auch möglich, dass ein anderes Modell als ein CAD-Modell, ein Skelettmodell und ein Punktmodell verwendet wird, z. B. ein Gittermodell.

In einer weiteren, nicht gesondert in den Figuren dargestellten Ausführungsvariante kann ohne Verwendung oder Vorhandensein eines dreidimensionales Maschinenmodells ein KNN zum Schätzen der Stellungsinformationen (z. B. Achsdaten, Gelenkstellungen usw.) aus einem 2D-Bild angewendet werden. Mittels bekannter Maße des Roboters 20 oder über ein geschätztes 3D-Modell und einen PnP-Algorithmus kann dann bspw. die Transformation geschätzt werden.

Es ist auch möglich, Kombinationen von zwei oder mehr Varianten und/oder von Teilaspekten von zwei oder mehr Varianten durchzuführen, um bspw. Plausibilisierungen, Optimierungen und/oder überhaupt eine Robotererkennung im bewegten Bild zu ermöglichen. Die Varianten können bspw. parallel oder nacheinander, z. B. aufeinander aufbauend und/oder wechselwirkend miteinander, durchgeführt werden.

Insbesondere kann eine oder mehrere Varianten, die ein Teilmodell betreffen, parallel oder nacheinander mit einer Variante, die ein Vollmodell betrifft durchgeführt werden. Ggf. kann zwar nicht der vollständige Roboter 20 im Bild mittels des Vollmodells erkannt werden, jedoch zumindest ein oder mehrere Teile des Roboters 20 mittels eines oder mehrerer Teilmodelle. Der Grund hierfür kann bspw. sein, dass der Roboter nicht vollständig im bewegten Bild aufgenommen ist.

Insbesondere können auch Varianten mit Tiefenbildkamera und 2D-Kamera parallel oder nacheinander durchgeführt werden.

Auf Basis der Erkennung des Roboters 20 im bewegten Bild kann in einem Verfahrensschritt G eine Kalibrierung, dynamische Lokalisierung sowie eine Optimierung der Darstellung der Erweitere-Realität-Anzeigeumgebung 22 durchgeführt werden.

Die initiale Kalibrierung im Verfahrensschritt H umfasst, dass eine relative Pose (Position und Orientierung) zwischen dem Roboter 20 und der Bildaufnahmeeinrichtung 18A bestimmt wird. Die relative Pose wird basierend auf der Erkennung des Roboters 20 und/oder eines Teils davon im Verfahrensschritt F bestimmt.

Die initiale Kalibrierung im Verfahrensschritt H umfasst zudem, dass ein Koordinatenabgleich zwischen dem Roboterkoordinatensystem des Roboters 20 und dem Koordinatensystem der Erweiterte-Realität-Anzeigeumgebung 22 durchgeführt wird. Dieser Schritt ist in Figur 2 beispielhaft dargestellt. Von einem Koordinatensystem 24 der integrierten Bildaufnahme- und Anzeigeeinrichtung 18 wird initial ein Koordinatensystem 26 der Erweiterte-Realität-Anzeigeumgebung 22 abgeleitet. Ein Koordinatenursprung bzw. Nullpunkt des Koordinatensystems 26 wird auf einen Koordinatenursprung bzw. Nullpunkt eines Basiskoordinatensystems 28 des Roboters 20 verschoben. Das Koordinatensystem 24 der integrierten Bildaufnahme- und Anzeigeeinrichtung 18 wird somit mit dem Koordinatensystem 28 des Roboters 20 abgeglichen.

Die kalibrierte Erweiterte-Realität-Anzeigeumgebung 22 kann jetzt räumlich und perspektivisch korrekt gemäß der Kalibrierung auf der Anzeigeeinrichtung 18B angezeigt werden.

Da sich eine relative Pose zwischen der Bildaufnahmeeinrichtung 18A und dem Roboter 20 verändern und/oder der Roboter 20 sich bewegen kann, ist zudem eine dynamische Lokalisierung bzw. ein kontinuierliches Tracking nötig, um eine fortwährend eine räumlich und perspektivisch korrekte Anzeige der Erweiterte-Realität-Anzeigeumgebung 22 zu erreichen.

Die dynamische Lokalisierung kann durch kontinuierliches Bestimmen der relativen Pose zwischen der Bildaufnahmeeinrichtung 18A und dem Roboter 20 sowie durch kontinuierliches Durchführen des Koordinatenabgleichs gemäß dem Verfahrensschritt H durchgeführt werden. Dieses Verfahren liefert optimale Ergebnisse, wenn der Roboter 20 oder ein Teil davon stets im Bild der Bildaufnahmeeinrichtung 18A ist.

Gerade bei mobilen Anwendungen der integrierten Bildaufnahme- und Anzeigeeinrichtung 18, wie im Beispiel von Figur 2 gezeigt, kann es jedoch vorkommen, dass der Roboter 20 aus dem Bild verschwindet, weil bspw. für die Programmierung oder Simulation lediglich der Arbeitsbereich des Roboters 20 betrachtet wird. In solchen Anwendungsfällen kann bspw. ein Simultane-Lokalisierung-und-Kartenerstellung-Algorithmus (sogenannter SLAM-Algorithmus - Simultaneous Localization and Mapping) in einem Verfahrensschritt I angewendet werden.

Der SLAM-Algorithmus wird durch die Verarbeitungseinheit 16 ausgeführt. Der SLAM-Algorithmus verwendet das von der Bildaufnahmeeinrichtung 18A aufgenommene bewegte Bild. Der SLAM-AIgorithmus erstellt eine dreidimensionale Karte der Umgebung der integrierten Bildaufnahme- und Anzeigeeinrichtung 18. Gleichzeitig schätzt der SLAM-Algorithmus eine Pose der integrierten Bildaufnahme- und Anzeigeeinrichtung 18 innerhalb dieser Karte. Es können unterschiedliche SLAM-Verfahren, wie bspw. EKF-SLAM, Fast-SLAM und Graph-SLAM, verwendet werden. Insbesondere kann mittels des SLAM-Algorithmus eine grobe kontinuierliche Lokalisierung der integrierten Bildaufnahme- und Anzeigeeinrichtung 18 im Raum vorgenommen werden.

Herkömmlich setzt der SLAM-Algorithmus initial einen willkürlichen Nullpunkt. Gemäß der vorliegenden Offenbarung wird der Nullpunkt des SLAM-Algorithmus auf den Nullpunkt der Erweiterte-Realität-Anzeigeumgebung 22 gemäß der Kalibrierung gesetzt und danach gehalten. Somit kann eine dynamische Lokalisierung der Erweiterte-Realität-Anzeigeumgebung 22 erreicht werden, auch wenn der Roboter 20 nicht mehr im Bild ist oder (zeitweise) nicht erkannt wird.

Beim Durchführen des SLAM-Algorithmus kommt es verfahrensbedingt aufgrund der Schätzung zu einem Drift. Zum Herausrechnen des Drifts wird das sogenannte Loop-Closing verwendet, bei dem bereits vermessene Kartenabschnitte wiedererkannt werden (Wiedererkennen von Bekanntem). Für das Loop-Closing kann gemäß der vorliegenden Offenbarung auf besonders vorteilhafte Weise der im Bild erkannte Roboter 20 oder ein oder mehrere Teile davon verwendet werden. Damit kann der Drift vorzugsweise vollständig herausgerechnet werden, da die aktuellen Stellungsinformationen des Roboters 20 zum aktuellen Bild ebenfalls vorliegen. Der SLAM-Algorithmus verwendet den Roboter 20 bzw. ein oder mehrere Teile davon als sogenannten Ankerpunkt bzw. natürlichen Marker. Es ist sogar möglich, dass sich der Roboter 20 hierbei in der Zwischenzeit bewegt, da die jeweils aktuellen Stellungsinformationen des Roboters 20 bekannt sind.

In einem Optimierungsschritt J kann die Anzeige der Erweiterte-Realität-Anzeigeumgebung 22 weiter optimiert werden. Weist die Erweiterte-Realität-Anzeigeumgebung 22 bspw. ein Maschinensimulationsmodell (Teilmodell oder Vollmodell) als Overlay / Überlagerung des Roboters 20 im bewegten Bild auf, so kann durch einen Pixelvergleich ein etwaiger Größenversatz, Positionsversatz oder Orientierungsversatz zwischen dem Roboter 20 und dem Maschinensimulationsmodell erkannt und ausgeglichen werden. Das Maschinensimulationsmodell kann bspw. dem dreidimensionalen Maschinenmodell entsprechen oder von diesem abgeleitet sein.

Mittels der Erweiterte-Realität-Anzeigeumgebung 22 können im Verfahrensschritt E bspw. Programme zum Steuern des Roboters 20 simuliert, erstellt, verändert und/oder überwacht werden. Besonders vorteilhaft kann ein Robotersimulationsmodell (Maschinensimulationsmodell), das den Roboter 20 beim Ausführen eines Programms simuliert, für die Programmsimulation, -erstellung und -änderung verwendet werden.

Es ist möglich, dass die Verarbeitungseinheit 16 über die Kommunikationsschnittstelle der Robotersteuerung 12 Programme ausliest, verändert und/oder für eine Visualisierung der Bewegungstrajektorien mittels der Erweiterte-Realität-Anzeigeumgebung 22 aufbereitet.

Es ist auch möglich, zur Programmierung bspw. eine Gestenerkennung zu implementieren, die zum Beispiel im bewegten Bild erkannte Handgesten zur Festlegung von Trajektorien und Effektorbetätigungen verwendet.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb, solange sie durch den Schutzbereich der beigefügten Ansprüche abgedeckt sind, auch in den Schutzbereich der Erfindung fallen.

### Bezugszeichenliste

- 10: Vorrichtung
- 12: Robotersteuerung (Maschinensteuerung)
- 14: Speicher
- 16: Verarbeitungseinheit
- 18: Bildaufnahme- und Anzeigeeinrichtung
- 18A: Bildaufnahmeeinrichtung
- 18B: Anzeigeeinrichtung (Erweiterte-Realität-Anzeigeeinrichtung)
- 20: Roboter (Maschine)
- 22: Erweiterte-Realität-Anzeigeumgebung
- 24-28: Koordinatensysteme

- A-J: Verfahrensschritte
- M1: Maschinenmodell
- M2: Angepasstes Maschinenmodell

## Patentansprüche

1. Verfahren zum Verwenden mit einer Maschine (20), insbesondere einem mobilen oder stationären Roboter, insbesondere eines Knickarmroboters, aufweisend:
Empfangen von mittels eines Messsystems der Maschine (20) erfassten Stellungsinformationen der Maschine (20);
Bilden eines dreidimensionalen Maschinenmodells (M1) der Maschine (20) basierend auf den empfangenen Stellungsinformationen;
Aufnehmen eines Bildes der Maschine (20) mittels einer Bildaufnahmeeinrichtung (18A); und
Anzeigen einer Erweiterte-Realität-Anzeigeumgebung (22) mittels einer Anzeigeeinrichtung (18B), wobei die Erweiterte-Realität-Anzeigeumgebung (22) kalibriert ist durch:
- Bestimmen einer relativen Pose zwischen der Maschine (20) und der Bildaufnahmeeinrichtung (18A) durch Erkennen der Maschine (20) und/oder eines oder mehrerer Teile der Maschine (20) in dem Bild basierend auf dem dreidimensionalen Maschinenmodell (M1); und
- Durchführen eines Koordinatenabgleichs zwischen einem Maschinenkoordinatensystem (28) der Maschine (20) und einem Koordinatensystem (26) der Bildaufnahmeeinrichtung (18A) basierend auf der bestimmten relativen Pose,
wobei
die Erweiterte-Realität-Anzeigeumgebung (22) ein Maschinensimulationsmodell in Überlagerung mit der Maschine (20), das basierend auf den empfangenen Stellungsinformationen gebildet ist, aufweist;
**dadurch gekennzeichnet, dass**
die Erweiterte-Realität-Anzeigeumgebung (22) dynamisch lokalisiert ist durch Anwenden eines Simultane-Lokalisierung-und-Kartenerstellung-Algorithmus (SLAM-Algorithmus) auf eine Mehrzahl von Bildern der Bildaufnahmeeinrichtung (18A); und
ein Loop-Closing des SLAM-Algorithmus zum Herausrechnen eines Drifts des SLAM-Algorithmus die im Bild erkannte Maschine (20) und/oder den einen oder die mehreren im Bild erkannten Teile der Maschine (20) und die empfangenen Stellungsinformationen der Maschine (20) verwendet.

2. Verfahren nach Anspruch 1, wobei:
ein Programm zum Steuern der Maschine (20) mit dem Maschinensimulationsmodell in der Erweiterte-Realität-Anzeigeumgebung (22) simulierbar, erstellbar, überwachbar und/oder veränderbar ist; oder
das Maschinensimulationsmodell dem dreidimensionalen Maschinenmodell (M1) entspricht oder von dem dreidimensionalen Maschinenmodell (M1) abgeleitet ist.

3. Verfahren nach Anspruch 2, ferner aufweisend:
Erfassen eines Größenversatzes, eines Positionsversatzes und/oder eines Orientierungsversatzes zwischen der Maschine (20) und dem Maschinensimulationsmodell durch einen Pixelvergleich; und
Verändern des Maschinensimulationsmodells entsprechend dem erfassten Größenversatz, Positionsversatz und/oder Orientierungsversatz.

4. Verfahren nach einem der vorherigen Ansprüche, wobei:
die Maschine (20) in dem Bild mittels des dreidimensionalen Maschinenmodells (M1) referenziert wird; oder
ein oder mehrere Teile der Maschine (20) in dem Bild mittels eines oder mehrerer Teile des dreidimensionalen Maschinenmodells (M1) referenziert wird; oder
das dreidimensionale Maschinenmodell (M1) ein Teilmaschinenmodell ist und ein oder mehrere Teile der Maschine (20) in dem Bild mittels des Teilmaschinenmodells referenziert wird.

5. Verfahren nach Anspruch 4, wobei:
eine Position und/oder Orientierung des einen oder der mehreren Teile der Maschine (20) relativ zu einer Maschinenbasis der Maschine (20) oder einem Nullpunkt des Maschinenkoordinatensystems (28) aus den empfangenen Stellungsinformationen abgeleitet oder geschätzt wird.

6. Verfahren nach einem der vorherigen Ansprüche, wobei:
das Bild ein Tiefenbild ist und/oder die Bildaufnahmeeinrichtung (18A) eine Tiefenbildkamera aufweist, und das Erkennen des einen oder der mehreren Teile der Maschine (20) das Erkennen von mindestens lediglich einem einzigen dreidimensionalen Raumpunkt der Maschine (20) im Bild aufweist.

7. Verfahren nach einem der Ansprüche 1 bis 5, wobei:
das Bild ein 2D-Bild ist und/oder die Bildaufnahmeeinrichtung eine 2D-Kamera aufweist, wobei:
das Erkennen des einen oder der mehreren Teile der Maschine (20) das Erkennen von mindestens drei Punkten der Maschine (20) im Bild aufweist; oder
die Maschine (20) in dem Bild mittels des dreidimensionalen Maschinenmodells (M1) und der Maschine (20) im Bild durch ein Drehen des dreidimensionalen Maschinenmodells (M1), ein Verschieben des dreidimensionalen Maschinenmodells (M1), ein Größenverändern des dreidimensionalen Maschinenmodells (M1), ein Anwenden eines Perspective-n-Point-Algorithmus oder ein Anwenden eines künstlichen neuronalen Netzes referenziert wird.

8. Verfahren nach einem der vorherigen Ansprüche, wobei die Erweiterte-Realität-Anzeigeumgebung (22) dynamisch lokalisiert ist durch:
kontinuierliches Bestimmen der relativen Pose; und
kontinuierliches Durchführen des Koordinatenabgleichs.

9. Verfahren nach einem der vorherigen Ansprüche, wobei:
ein Nullpunkt des SLAM-Algorithmus auf einen Nullpunkt des Maschinenkoordinatensystems (28) und/oder ein kalibrierten Nullpunkt eines Koordinatensystems (26) der Bildaufnahmeeinrichtung (18A) gesetzt und/oder gehalten ist.

10. Verfahren nach einem der vorherigen Ansprüche, wobei:
das Durchführen des Koordinatenabgleichs ein Setzen und/oder Halten eines Nullpunkts des Koordinatensystems (26) der Erweiterte-Realität-Anzeigeumgebung (22) auf einen Nullpunkt des Maschinenkoordinatensystem (28) aufweist.

11. Verfahren nach Anspruch 4 oder 5 oder einem der Ansprüche 6 bis 10, wenn abhängig von Anspruch 4 oder Anspruch 5, wobei:
das Referenzieren ein Drehen, Verschieben und/oder Größenverändern des dreidimensionalen Maschinenmodells (M1) aufweist; oder
das Referenzieren ein Anwenden eines Iterative-Closest-Point-Algorithmus, eines Perspective-n-Point-Algorithmus und/oder eines künstlichen neuronalen Netzes aufweist.

12. Verfahren nach einem der vorherigen Ansprüche, wobei:
das dreidimensionale Maschinenmodell (M1) ein CAD-Modell ist; oder
das dreidimensionale Maschinenmodell (M1) ein Skelettmodell ist; oder
das dreidimensionale Maschinenmodell (M1) ein Gittermodell ist; oder
das dreidimensionale Maschinenmodell (M1) ein Punktmodell ist.

13. Verfahren nach einem der vorherigen Ansprüche, wobei:
die Maschine (20) frei von künstlichen Markern ist oder das Bild frei von künstlichen Markern ist.

14. Verfahren nach einem der vorherigen Ansprüche, wobei:
ein Erkennen der Maschine (20) und ein Erkennen des einen oder der mehreren Teile der Maschine (20) parallel durchgeführt wird.

15. Vorrichtung zum Steuern einer Maschine (20), insbesondere eines mobilen oder stationären Roboters, insbesondere eines Knickarmroboters, aufweisend:
eine Bildaufnahmeeinrichtung (18A);
eine Anzeigeeinrichtung (18B); und
eine Verarbeitungseinheit (16), die zum Ausführen eines Verfahrens nach einem der vorherigen Ansprüche eingerichtet ist.

## Claims

1. A method for use with a machine (20), in particular a mobile or stationary robot, in particular an articulated arm robot, comprising:
receiving pose information of the machine (20) detected by means of a measuring system of the machine (20);
forming a three-dimensional machine model (M1) of the machine (20) based on the received position information;
capturing an image of the machine (20) by means of an image capturing device (18A); and
displaying an augmented reality display environment (22) by means of a display device (18B), wherein the augmented reality display environment (22) is calibrated by:
- determining a relative pose between the machine (20) and the image capturing device (18A) by recognising the machine (20) and/or one or more parts of the machine (20) in the image based on the three-dimensional machine model (M1); and
- performing coordinate matching between a machine coordinate system (28) of the machine (20) and a coordinate system (26) of the image capturing device (18A) based on the determined relative pose,
wherein
the augmented reality display environment (22) comprises a machine simulation model superimposed on the machine (20) formed based on the received position information; **characterised in that**
the augmented reality display environment (22) is dynamically localised by applying a simultaneous localisation and mapping algorithm (SLAM algorithm) to a plurality of images of the image capturing device (18A); and
loop-closing of the SLAM algorithm for extracting a drift of the SLAM algorithm uses the machine (20) recognised in the image and/or the one or more parts of the machine (20) recognised in the image and the received position information of the machine (20).

2. The method according to claim 1, wherein:
a programme for controlling the machine (20) can be simulated, created, monitored and/or modified with the machine simulation model in the augmented reality display environment (22); or
the machine simulation model corresponds to the three-dimensional machine model (M1) or is derived from the three-dimensional machine model (M1).

3. The method according to claim 2, further comprising:
detecting a size offset, a position offset and/or an orientation offset between the machine (20) and the machine simulation model by a pixel comparison; and
modifying the machine simulation model according to the detected size offset, position offset and/or orientation offset.

4. The method according to any of the previous claims, wherein:
the machine (20) is referenced in the image by means of the three-dimensional machine model (M1); or
one or more parts of the machine (20) are referenced in the image by means of one or more parts of the three-dimensional machine model (M1); or
the three-dimensional machine model (M1) is a partial machine model and one or more parts of the machine (20) are referenced in the image by means of the partial machine model.

5. The method according to claim 4, wherein:
a position and/or orientation of the one or more parts of the machine (20) relative to a machine base of the machine (20) or a zero point of the machine coordinate system (28) is derived or estimated from the received position information.

6. The method according to any one of the previous claims, wherein:
the image is a depth image and/or the image capturing device (18A) comprises a depth imaging camera, and the recognising the one or more parts of the machine (20) comprises recognising at least only a single three-dimensional spatial point of the machine (20) in the image.

7. The method according to any one of claims 1 to 5, wherein:
the image is a 2D image and/or the image capturing device comprises a 2D camera, wherein:
recognising the one or more parts of the machine (20) comprises recognising at least three points of the machine (20) in the image; or
the machine (20) is referenced in the image by means of the three-dimensional machine model (M1) and the machine (20) in the image by rotating the three-dimensional machine model (M1), shifting the three-dimensional machine model (M1), resizing the three-dimensional machine model (M1), applying a perspective-n-point algorithm or applying an artificial neural network.

8. The method according to any one of the previous claims, wherein the augmented reality display environment (22) is dynamically localised by:
continuously determining the relative pose; and
continuously performing the coordinate alignment.

9. The method according to any of the previous claims, wherein:
a zero point of the SLAM algorithm is set and/or held to a zero point of the machine coordinate system (28) and/or a calibrated zero point of a coordinate system (26) of the image capturing device (18A).

10. The method according to any one of the previous claims, wherein:
the performing of the coordinate matching comprises setting and/or holding a zero point of the coordinate system (26) of the augmented reality display environment (22) to a zero point of the machine coordinate system (28).

11. The method according to claim 4 or 5 or any one of claims 6 to 10, when dependent on claim 4 or claim 5, wherein:
the referencing comprises rotating, shifting and/or resizing the three-dimensional machine model (M1); or
the referencing comprises applying an iterative closest point algorithm, a perspective-n-point algorithm and/or an artificial neural network.

12. The method according to any of the previous claims, wherein:
the three-dimensional machine model (M1) is a CAD model; or
the three-dimensional machine model (M1) is a skeleton model; or
the three-dimensional machine model (M1) is a lattice model; or
the three-dimensional machine model (M1) is a point model.

13. The method according to any one of the previous claims, wherein:
the machine (20) is free of artificial markers; or the image is free of artificial markers.

14. The method according to any one of the previous claims, wherein:
a recognition of the machine (20) and a recognition of the one or more parts of the machine (20) are performed in parallel.

15. A device for controlling a machine (20), in particular a mobile or stationary robot, in particular an articulated robot, comprising:
an image capturing device (18A);
a display device (18B); and
a processing unit (16) configured to perform a method according to any one of the previous claims.

## Revendications

1. Procédé destiné à être utilisé avec une machine (20), en particulier un robot mobile ou stationnaire, en particulier un robot à bras articulé, comprenant :
la réception d'informations de position de la machine (20) acquises au moyen d'un système de mesure de la machine (20) ;
la formation d'un modèle de machine tridimensionnel (M1) de la machine (20) sur la base des informations de position reçues ;
la capture d'une image de la machine (20) en utilisant un dispositif d'enregistrement d'images (18A) ; et
l'affichage d'un environnement (22) d'affichage de réalité augmentée au moyen d'un dispositif d'affichage (18B), l'environnement (22) d'affichage de réalité augmentée étant calibré par :
- le fait de déterminer une pose relative entre la machine (20) et le dispositif (18A) de capture d'image en reconnaissant la machine (20) et/ou une ou plusieurs parties de la machine (20) dans l'image sur la base du modèle de machine tridimensionnel (M1) ; et
- le fait d'effectuer une comparaison de coordonnées entre un système (28) de coordonnées machine de la machine (20) et un système (26) de coordonnées du dispositif (18A) de capture d'image sur la base de la pose relative déterminée,
dans lequel
l'environnement (22) d'affichage de réalité augmentée comprend un modèle de simulation de machine en superposition avec la machine (20), formé sur la base des informations de position reçues ;
**caractérisé en ce que**
l'environnement (22) d'affichage de réalité augmentée est localisé de manière dynamique en appliquant un algorithme de localisation et de mappage simultanés (algorithme SLAM) à une pluralité d'images du dispositif (18A) de capture d'image ; et
une fermeture de boucle de l'algorithme SLAM pour extraire une dérive de l'algorithme SLAM utilise la machine (20) reconnue dans l'image et/ou la ou les parties de la machine (20) reconnues dans l'image et les informations de position reçues de la machine (20).

2. Procédé selon la revendication 1, dans lequel :
un programme de commande de la machine (20) est apte à être simulé, créé, surveillé et/ou modifié avec le modèle de simulation de machine dans l'environnement (22) d'affichage de réalité augmentée ; ou
le modèle de simulation de machine correspond au modèle de machine tridimensionnel (M1) ou est dérivé du modèle de machine tridimensionnel (M1).

3. Procédé selon la revendication 2, comprenant en outre :
le fait de détecter un décalage de taille, un décalage de position et/ou un décalage d'orientation entre la machine (20) et le modèle de simulation de machine par une comparaison de pixels ; et
le fait de modifier le modèle de simulation de machine en fonction du décalage de taille, du décalage de position et/ou du décalage d'orientation détectés.

4. Procédé selon l'une des revendications précédentes, dans lequel :
la machine (20) est référencée dans l'image au moyen du modèle de machine tridimensionnel (M1) ; ou
une ou plusieurs parties de la machine (20) sont référencées dans l'image au moyen d'une ou plusieurs parties du modèle de machine tridimensionnel (M1) ; ou
le modèle de machine tridimensionnel (M1) est un modèle de machine partiel et une ou plusieurs parties de la machine (20) sont référencées dans l'image au moyen du modèle de machine partiel.

5. Procédé selon la revendication 4, dans lequel :
une position et/ou une orientation de la ou des parties de la machine (20) par rapport à une base de la machine (20) ou à un point d'origine du système de coordonnées de la machine (28) est déduite ou estimée à partir des informations de position reçues.

6. Procédé selon l'une des revendications précédentes, dans lequel :
l'image est une image de profondeur et/ou le dispositif (18A) de capture d'image comprend une caméra de profondeur, et la détection de la ou des parties de la machine (20) comprend la détection d'au moins un seul point tridimensionnel de l'espace de la machine (20) dans l'image.

7. Procédé selon l'une des revendications 1 à 5, dans lequel :
l'image est une image 2D et/ou le dispositif de capture d'image comprend une caméra 2D,
dans lequel :
la détection d'une ou plusieurs parties de la machine (20) comprend la détection d'au moins trois points de la machine (20) dans l'image ; ou
la machine (20) est référencée dans l'image au moyen du modèle de machine tridimensionnel (M1) et la machine (20) est référencée dans l'image en faisant tourner le modèle de machine tridimensionnel (M1), en déplaçant le modèle de machine tridimensionnel (M1), en redimensionnant le modèle de machine tridimensionnel (M1), en appliquant un algorithme de perspective-n-point ou en appliquant un réseau neuronal artificiel.

8. Procédé selon l'une des revendications précédentes, dans lequel l'environnement (22) d'affichage de réalité augmentée est localisé de manière dynamique par :
la détermination continue de la pose relative ; et
l'exécution en continu de l'ajustement des coordonnées.

9. Procédé selon l'une des revendications précédentes, dans lequel :
un point zéro de l'algorithme SLAM est fixé et/ou maintenu à un point zéro du système de coordonnées de la machine (28) et/ou à un point zéro calibré d'un système de coordonnées (26) du dispositif (18A) de capture d'image.

10. Procédé selon l'une des revendications précédentes, dans lequel :
la mise en œuvre de l'ajustement de coordonnées comprend le positionnement et/ou le maintien d'un système de coordonnées d'origine (26) de l'environnement (22) d'affichage de réalité augmentée à une origine du système de coordonnées de la machine (28).

11. Procédé selon la revendication 4 ou la revendication 5 ou selon l'une quelconque des revendications 6 à 10, lorsqu'elle dépend de la revendication 4 ou de la revendication 5, dans lequel :
le référencement comprend une rotation, un déplacement et/ou un redimensionnement du modèle tridimensionnel de machine (M1) ; ou
le référencement comprend l'application d'un algorithme de point de fermeture itératif, d'un algorithme de perspective-n-point et/ou d'un réseau neuronal artificiel.

12. Procédé selon l'une des revendications précédentes, dans lequel :
le modèle de machine tridimensionnel (M1) est un modèle de CAO ; ou
le modèle de machine tridimensionnel (M1) est un modèle de squelette ; ou
le modèle de machine tridimensionnel (M1) est un modèle à grille ; ou
le modèle de machine tridimensionnel (M1) est un modèle à points.

13. Procédé selon l'une des revendications précédentes, dans lequel :
la machine (20) est exempte de marqueurs artificiels ou
l'image est exempte de marqueurs artificiels.

14. Procédé selon l'une des revendications précédentes, dans lequel :
une reconnaissance de la machine (20) et une reconnaissance d'une ou plusieurs parties de la machine (20) sont effectuées en parallèle.

15. Dispositif de commande d'une machine (20), notamment d'un robot mobile ou fixe, notamment d'un robot à bras articulé, comprenant :
un dispositif (18A) de capture d'image ;
un dispositif d'affichage (18B) ; et
une unité de traitement (16) agencée pour mettre en œuvre un procédé selon l'une des revendications précédentes.
